## Europäisches Patentamt
## European Patent Office
## Office européen des brevets

(19)

(11) Veröffentlichungsnummer: **0 148 511**
**B1**

(12) # EUROPÄISCHE PATENTSCHRIFT

(45) Veröffentlichungstag der Patentschrift:
**14.01.87**

(51) Int. Cl.⁴: **B 01 D 9/00**

(21) Anmeldenummer: **84201156.1**

(22) Anmeldetag: **10.08.84**

(54) **Verfahren zur Stofftrennung eines flüssigen Gemisches durch fraktionierte Kristallisation.**

(30) Priorität: **25.11.83 DE 3342667**

(43) Veröffentlichungstag der Anmeldung:
**17.07.85 Patentblatt 85/29**

(45) Bekanntmachung des Hinweises auf die Patenterteilung:
**14.01.87 Patentblatt 87/3**

(84) Benannte Vertragsstaaten:
**BE DE FR GB IT NL**

(56) Entgegenhaltungen:
**DE-A-1 769 123**
**DE-B-1 226 078**

(73) Patentinhaber: **Rütgerswerke Aktiengesellschaft,
Mainzer Landstrasse 217, D-6000 Frankfurt a.Main
1 (DE)**

(72) Erfinder: **Spengler, Hans, Dr., Windmühlenweg 3,
D-4716 Olfen (DE)**
Erfinder: **Stolzenberg, Konrad, Dr., Insterburger
Weg 5, D-4355 Waltrop (DE)**

**0 148 511**

**Beschreibung**

Die Erfindung betrifft ein Verfahren zur Stofftrennung eines flüssigen Gemisches durch fraktionierte Kristallisation, das sich insbesondere für Stoffsysteme mit empfindlichen Kristallstrukturen eignet, durch Abscheiden einer Kristallschicht an der Wandung einer gefüllten Kristallisationszone, wobei das flüssige Gemisch indirekt gekühlt wird, Entfernen der restlichen Flüssigkeit und Abschmelzen der Kristallschicht in einer oder mehreren Stufen.

Für die fraktionierte Kristallisation flüssiger Gemische, die sowohl Schmelzen wie auch Lösungen umfassen, sind eine Vielzahl von Verfahren bekannt. Ihre Anwendbarkeit für ein bestimmtes Stoffsystem ist im wesentlichen von den physikalischen Eigenschaften der wachsenden Kristalle abhängig. Für Stoffsysteme, bei denen die kristallisierbaren Komponenten mit glatten Kristalloberflächen und mit guten bis sehr guten Hafteigenschaften auf den Kühlflächen abgeschieden werden, werden wegen des günstigeren Wärme- und Stoffaustausches Verfahren bevorzugt, bei denen das flüssige Gemisch in turbulenter Strömung über die indirekt gekühlten Kühlflächen bzw. durch die Kühlzone geleitet wird. Solche Verfahren werden beispielsweise beschrieben in der DE-AS 17 69 123, der DE-OS 26 09 364, der US-PS 3,272,875, der US-PS 2,826,045 und der GB-PS 1,083,850.

Viele Stoffsysteme lassen sich jedoch nicht in glatten, kompakten kristallinen Schichten auskristallisieren, ihre Hafteigenschaften an der Kühlfläche werden durch ihr ausgeprägtes dendritisches, tafeliges oder nadelförmiges Kristallwachstum erheblich verschlechtert. Derartige Stoffsysteme lassen sich nach Verfahren kristallisieren, bei denen eine Kristallsuspension erzeugt wird. Solche Verfahren sind beispielsweise in der DE-PS 847 137 und der DE-PS 977 280 beschrieben.

Nachteilig an den Suspensionsverfahren ist die aufwendige Trennung von Kristallgut und Mutterlauge mit Filtern oder Zentrifugen. Hinzu kommt, daß bei weichen Kristallstrukturen oder Nadeln durch das Fördern sehr feines Kristallgut als Abrieb entsteht, das zu Kristallgutdurchbrüchen oder Verstopfungen bei der Abtrennung führen kann.

Stoffsysteme mit Kristallstrukturen geringer Festigkeit lassen sich gut aus ruhenden flüssigen Gemischen kristallisieren, wie dies in der DE-PS 14 43 066 am Beispiel der Raffination von flüssigem Naphthalin beschrieben wird. Dabei erfolgt der Wärmeaustausch über Platten oder Rippenrohre, deren Kühlflächen senkrecht in einem Trog installiert sind. Nachteilig ist jedoch, daß für eine gute Trennleistung sehr lange Zykluszeiten benötigt werden. So werden z.B. bei der Naphthalinkristallisation 6 bis 8 Stunden für die eigentliche Kristallisation, 8 bis 10 Stunden für das partielle Abschmelzen und 1 bis 2 Stunden für das Aufschmelzen des Reinkristalles benötigt.

Es bestand daher die Aufgabe, ein Verfahren zu entwickeln, nach dem sich Stoffsysteme mit besonders weichen und damit empfindlichen Kristallstrukturen in kürzeren, d.h. wirtschaftlicheren Zykluszeiten bzw. bei gleichen Zykluszeiten in höherer Reinheit oder Ausbeute kristallisieren lassen.

Die Aufgabe wird erfindungsgemäß dadurch gelöst, daß die Kristallisation in einer Vorrichtung erfolgt, in der die Kühlflächen in einem Winkel von 5 bis 70 Grad zur Senkrechten angeordnet sind, und daß das flüssige Gemisch sich in Ruhe befindet oder maximal mit einer Geschwindigkeit bewegt wird, bei der gerade noch keine Kristallablösung von den Kühlflächen und kein Abbrechen der Kristallite aus der Kristallschicht stattfindet.

Das erfindungsgemäße Verfahren nutzt die Tatsache aus, daß dentritische, tafelförmige bzw. nadelförmige Kristalle vorzugsweise in senkrechter Richtung zur Kühl fläche wachsen. Dieses Wachstum erfolgt wegen der relat geringen Dichteunterschiede zwischen fester und flüssiger Phase nahezu unabhängig von der Erdanziehungskraft. An schräggestellten Kühlflächen wachsen die Kristalle also senkrecht zur Kühlfläche und daher, auf die Richtung der Erdanziehungskraft bezogen, schräg nach oben bzw. schräg nach unten. Diese Lage der Kristalle wirkt sich besonders günstig auf die Phasentrennung zwischen den Kristallen und der anhaftenden Restflüssigkeit aus. Dieses sogenannte "Tropföl" kann bei dem erfinderischen Verfahren in kürzerer Zeit und größeren absoluten Mengen aus der Kristallschicht auslaufen.

Das erfinderische Verfahren kann in Kristallisationsapparaten mit schräg zur Senkrechten stehenden, parallel angeordneten Platten oder Rohren durchgeführt weden, die sowohl kühlbar als auch heizbar sein müssen und mit Flossen, Zähnen oder in Längsrichtung verlaufenden Rippen versehen sein können.

Es ist jedoch ebenfalls möglich, Kristallisationsapparate mit schräg zur Waagerechten eingebauten Rohren, die mit radial angeordneten Rippen oder Lamellen versehen sind, oder mit waagerecht angeordneten Rohren zu verwenden, die mit schräg gestellten Ripper oder Flügeln versehen sind.

Rippenrohre sind besonders vorteilhaft bei der Kristallisation aus ruhenden Flüssigkeitsgemischen, um die Wärmeübertragung zu verbessern. Um eine gute Trennwirkung zwischen Tropföl und Kristallgut zu erzielen, ist bereits eine Neigung der wärmeübertragenden Fläche von 5° zur senkrechten Achse ausreichend. Neigungswinkel von über 70 Grad fördern zwar das Ablaufen der flüssigen Phase vom Einzelkristall, können aber die Ablaufgeschwindigkeit der flüssigen Phasen entlang den tiefer gelagerten Flächen reduzieren. Es wurde gefunden, daß der optimale Neigungswinkel zwischen 10 und 45 Grad liegt. Die fraktionierte Kristallisation wird in an sich bekannter Weise durchgeführt: Nach dem Abscheiden der Kristalle an den indirekt gekühlten Wänden der Kristallisationszone wird zunächst die nicht kristallisierte Flüssigkeit abgelassen. Anschließend wird durch programmgesteuerte Temperaturerhöhung die Kristallschicht abgeschmolzen, wobei das geschmolzene Kristallgut in Fraktionen entnommen werden kann.

Beim Abschmelzen der einzelnen Fraktionen werden aufgrund der Wärmezufuhr über die Wärmeübertragungsflächen die Haftkräfte der Kristallschicht auf diesen Flächen stark gemindert. Bei senkrechten Wärmetauscherflächen führt dies zu einem Abrutschen der gesamten Kristallmasse. Das hat Verstopfungen innerhalb des Kristallisators oder des Ablaufventils zur Folge. Die Gefahr des unerwünschten Abrutschens der Kristallschicht wird durch die Neigung der Wärmetauscherflächen ebenfalls gemindert.

Für viele Trennaufgaben ist die einstufige Kristallisation nicht ausreichend. Die fraktionierte Kristallisation wird dann mehrstufig ausgeführt, um eine höhere Reinheit zu erzielen.

Die mehrstufige fraktionierte Kristallisation kann sukzessive in ein- und derselben Anlage erfolgen, wobei die Restschmelzen bzw. -lösungen und die einzelnen Fraktionen des abgeschmolzenen Kristalles aus den einzelnen Stufen in entsprechenden Gefäßen gespeichert werden. Sie kann aber auch in einer Reihe baugleicher, hintereinandergeschalteter Kristallisationsapparate durchgeführt werden.

Die fraktionierte Kristallisation wird in Zyklen durchgeführt, wobei jeder Zyklus aus mehreren Stufen bestehen kann. Die Restschmelze sowie die einzelnen durch partielles Abschmelzen gewonnenen Fraktionen mit geringerer Reinheit werden jeweils dem Einsatzprodukt der Stufe des folgenden Zyklus zugeführt, die der jeweiligen Konzentration entspricht. Das Restkristall dient als Einsatzmaterial für die folgende Stufe desselben Zyklus. Zum Abschmelzen des Restkristalls kann üblicherweise die Schmelze der gleichen mittleren Konzentration aus dem vorangegangenen Zyklus verwendet werden.

Die Zeit des Abschmelzens des Restkristalls kann bei dem erfindungsgemäßen Verfahren auch erheblich verkürzt werden, wenn der verflüssigte Anteil des Restkristalls bzw. die Schmelze der entsprechenden Stufe aus dem vorangegangenen Zyklus in einem äußeren Kreislauf aufgeheizt und dem Kopf des Kristallers zugeführt wird.

Die Aufteilung der Stoffströme in jeder Stufe sowie die erforderliche Anzahl der Stufen richtet sich nach der geforderten Ausbeute sowie nach der gewünschten Reinheit des Kristalls der letzten Stufe.

Die Hintereinanderschaltung mehrerer Kristallisationsapparate hat sich besonders dann als wirtschaftlich vorteilhaft erwiesen, wenn die Einsatzmengen der einzelnen Stufen starke Unterschiede aufweisen.

Die Erfindung wird anhand der folgenden Beispiele näher erläutert ohne darauf beschränkt zu sein.

**Beispiel 1**

In einem um 10 Grad gegenüber der vertikalen Raumrichtung geneigten Rohrbündelkristaller wird ein Isomerengemisch aus Diisopropylnaphthalin kristallisiert. Die Schmelze wird in die Rohre des Rohrbündels eingefüllt. Nach Abkühlung von 65°C auf 50°C mit einem Temperaturgradienten von 0,25 K/min werden die nicht kristallisierten Bestandteile der Schmelze (1.Fraktion) nach Öffnen des Bodenventils abgelassen. Während der Aufheizphase mit einem Temperaturgradienten von 0,33 K/min werden durch partielles Schmelzen weitere Fraktionen 2 bis 4 entnommen. Das Restkristall (5.Fraktion) wird durch rasches Aufheizen auf 80°C total abgeschmolzen.

In einer einzigen Kristallisationsstufe werden folgende Ergebnisse erzielt:

|  | Menge | | Gehalt an 2,6-Diisopropyl-naphthalin |
|---|---|---|---|
|  | g | Gew.% | Gew.% |
| Einsatz | 246 | 100 | 91,6 |
| 1.Fraktion | 31,3 | 12,73 | 77,1 |
| 2.Fraktion | 24,5 | 9,95 | 77,1 |
| 3.Fraktion | 18,8 | 7,64 | 80,4 |
| 4.Fraktion | 14,0 | 5,69 | 83,9 |
| 5.Fraktion | 157,4 | 63,98 | 98,8 |

Die Zykluszeit für eine Kristallisationsstufe bestehen aus Kristallisation, Abtropfen, partielles Schmelzen und totales Aufschmelzen beträgt 3,5 h.

Der Vergleichsversuch, durchgeführt in einem senkrecht installierten Rohrbündel, brachte bei gleicher

3

Einsatzzusammensetzung der Diisopropylnaphthalin-Fraktion und gleichen Versuchsparametern (Temperatur-Zeit-Programm, Fraktionierung) ein deutlich schlechteres Trennergebnis bezüglich der Abtrennung der Verunreinigungskomponenten von 2,6-Diisopropylnaphthalin.

| | Menge | | Gehalt an 2,6-Diisopropyl-naphthalin |
| --- | --- | --- | --- |
| | g | Gew.% | Gew.% |
| Einsatz | 246 | 100 | 91,6 |
| 1.Fraktion | 31,0 | 12,60 | 80,2 |
| 2.Fraktion | 24,0 | 9,76 | 79,7 |
| 3.Fraktion | 19,2 | 7,80 | 83,5 |
| 4.Fraktion | 14,3 | 5,81 | 86,6 |
| 5.Fraktion | 157,5 | 64,03 | 97,1 |

**Beispiel 2**

Die Schmelze einer Phenolfraktion wird in einen rechteckigen Kasten gefüllt. Am Kasten befindet sich eine Vorrichtung, die geeignet ist, den Kasten in unterschiedlichen Neigungen gegenüber der Senkrechten bzw. der Waagrechten zu installieren. In dem Kasten befinden sich parallel zueinander angeordnete Rohre, die mit einem Kühl- bzw. Heizmedium durchströmt werden. Diese Rohre besitzen zwei gegenüberliegende, längs angeschweißte Rippen und sind so in dem Kasten installiert, daß durch die Längsrippen der Rohre eine wärmeübertragende, große Fläche gebildet wird.

In dem ersten Versuch wird der Kasten so geneigt, daß die durch die Rippen gebildeten Flächen einen Winkel von 45 Grad zur Senkrechten bilden. Der Abstand zwischen zwei gegenüberliegenden Flächen beträgt 50 mm.

Als Einsatz zur Kristallisation dient eine Phenolfraktion folgender Zusammensetzung:

| | | |
| --- | --- | --- |
| Leichtöl: | 0,06 | % |
| Phenol: | 97,30 | % |
| o-Kresol: | 2,42 | % |
| m.p.Kresol: | 0,08 | % |
| Schweröl: | 0,14 | % |

Nach Einfüllung der Phenolschmelze in den Kasten wird die Temperatur des Kühlwassers von 40°C auf 26°C während 90 Min. mit einem Gradienten von 0,156 K / min erniedrigt. Nach Erreichen der Kühltemperatur wird das Bodenventil geöffnet, um den nicht kristallisierten Rückstand ablaufen zu lassen. Nach einer Haltezeit von 30 Min. bei 26°C wird die Temperatur langsam mit einem Gradienten von 0,2 K /min auf 37°C erhöht. Bei 37°C wird die Temperatur solange gehalten, bis die gewünschte Flüssigkeitsmenge abgelaufen ist. Das gereinigte Kristall wird durch Temperaturerhöhung auf 60°C rasch abgeschmolzen. Zur Verkürzung der Abschmelzzeit wird die Schmelze über einen äußeren Kreislauf in den Kristaller geführt und dabei über einen Wärmeaustauscher ebenfalls erwärmt.

Es werden folgende Ergebnisse erzielt:

| | Mengen (kg) | Zeiten (min.) | Temperaturen (°C) | Phenolkonz. (Gew.%) |
|---|---|---|---|---|
| Kristallisieren | 26,2 | 90 | 40 - 26 | 97,3 |
| Halten | 2,5 | 30 | 26 | 95,3 |
| part.Schmelzen | 8,9 | 60 | 26 - 37 | 95,6 |
| Kristall | 14,8 | 20 | 60 | 98,7 |

In einem Vergleichsversuch werden die Rippenrohre entsprechend dem Stand der Technik senkrecht in dem Kasten eingebaut, so daß auch die wärmeübertragenden Flächen parallel zur senkrechten Raumrichtung ausgerichtet sind. Der Abstand zwischen zwei gegenüberliegenden Flächen beträgt 50 mm. Um ein mögliches Abrutschen der Kristalle während des partiellen Schmelzens zu vermeiden, wird zwischen zwei gegenüberliegenden Flächen ein großes Maschennetz mit einer Maschenweite von 10 mm installiert.

Mit der gleichen Einsatzfraktion wie in dem ersten Versuch werden folgende Ergebnisse erzielt:

| | Mengen ( kg ) | Zeiten (min.) | Temperaturen (°C) | Phenolkonz. (%) |
|---|---|---|---|---|
| Kristallisieren | 26,2 | 90 | 40 - 26 | 97,3 |
| Halten | 1,8 | 30 | 26 | 95,8 |
| part.Schmelzen | 9,6 | 100 | 26 - 37 | 95,7 |
| Kristall | 14,8 | 20 | 60 | 98,5 |

Nach dem erfinderischen Verfahren ist es also möglich, bei etwa gleicher Mengenabnahme die gesamte Zykluszeit um etwa 17 % zu verkürzen und dabei die Reinheit des Phenols noch zu erhöhen.

**Beispiel 3**

In einem um 10 Grad gegenüber der vertikalen Raumrichtung geneigten Rohrbündel wird eine Fraktion o-Kresol mit einem Basengehalt von 6,16 % kristallisiert. Die innerhalb der Rohre eingefüllte Schmelze wird von 25°C auf 5°C linear mit einem Gradienten von 0,17 K/min. abgekühlt. Bei der Abkühlung kristallisiert o-Kresol erst nach einer Unterkühlung von ca. 15°C, dann aber mit hoher Geschwindigkeit. Um die Kristallisation reproduzierbar einleiten zu können, wird daher in dem mit der Schmelze gefüllten Sammelraum unterhalb des Rohrbündels eine dünne Rohrleitung mit einem Durchmesser von 6 mm verlegt, die mit zwei Anschlüssen nach außen versehen ist. Während der ersten 30 Minuten wird durch diese Leitung eine auf - 20°C gekühlte Flüssigkeit geleitet, um an der Rohrwandung dieses Kühlfingers definierte Startbedingungen für die Kristallisation zu erzeugen.

Die Kristallisation wird wie folgt durchgeführt:
a) Abkühlung von 25°C auf 5°C mit einem Gradienten von 0,17 K/min.
b) Entnahme von Tropföl 1 bei 5 °C
c) Partielles Schmelzen durch Aufheizen von 5°C auf 27°C mit einem Gradienten von 0,2 k/min und Entnahme des Tropföles 2
d) Totalabschmelzen des Restkristalls bei 50°C
Es werden folgende Ergebnisse erzielt:

5

|            | Mengen ( g ) | Basen (Gew. %) |
|------------|--------------|----------------|
| Einsatz    | 30.000       | 6,62           |
| Tropföl 1  | 5.300        | 16,32          |
| Tropföl 2  | 12.700       | 7,70           |
| Kristall   | 12.000       | 1.19           |

## Patentansprüche

1. Verfahren zur Stofftrennung eines flüssigen Gemisches durch fraktionierte Kristallisation, das sich insbesondere für Stoffsysteme mit empfindlichen Kristallstrukturen eignet, durch Abscheiden einer Kristallschicht an der Wandung einer gefüllten Kristallisationszone, wobei das flüssige Gemisch indirekt gekühlt wird, Entfernen der restlichen Flüssigkeit und Abschmelzen der Kristallschicht in einer oder mehreren Stufen, dadurch gekennzeichnet, daß die Kristallisation in einer Vorrichtung erfolgt, in der die Kühlflächen in einem Winkel von 5 bis 70 Grad zur Senkrechten angeordnet sind, und daß sich das flüssige Gemisch in Ruhe befindet oder maximal mit einer Geschwindigkeit bewegt wird, bei der gerade noch kein Abbrechen der Kristallite aus der Kristallschicht stattfindet.

2. Verfahren nach Anspruch 1, dadurch gekennzeichnet, daß die Neigung der Kühlflächen Senkrechten 10 bis 45 Grad beträgt.

3. Verfahren nach den Ansprüchen 1 bis 2, dadurch gekennzeichnet, daß die Kristallisation in mehreren aufeinander folgenden Stufen erfolgt.

4. Verfahren nach den Ansprüchen 1 bis 3, dadurch gekennzeichnet, daß die Restschmelze und die durch partielles Abschmelzen gewonnenen Fraktionen den entsprechenden Stufen des folgenden Zyklus zugeführt werden.

5. Verfahren nach Anspruch 1, dadurch gekennzeichnet, daß zur Vermeidung der Unterkühlung des flüssigen Gemisches die Kristallisation durch an der Wand gebildete Kristalle eingeleitet wird, die durch indirekte Unterkühlung an einer kleinen Kühlfläche in der Kristallisationszone erzeugt werden.

## Claims

1. A process for separating the components of a liquid mixture by means of fractional crystallization, which is especially suited for substances with sensitive crystalline structures, comprising the deposition of a crystalline layer on the wall of the filled crystallization zone by indirectly cooling the liquid mixture, removing the residual liquid and melting the crystalline layer in one or more stages, wherein the crystallization takes place in a device, in which the cooling surfaces are arranged in an angle of between 5 to 70 degrees to the vertical, and the liquid mixture is not moved or moved with a maximum velocity, whereby the crystallites fail to break away from the crystalline layer.

2. The process according to claim 1, wherein the inclination of the cooling surfaces to the vertical is 10 to 45 degrees.

3. The process according to claim 1 and 2, wherein the crystallization is performed in several successive stages.

4. The process according to claims 1 to 3, wherein the residual melt and fractions obtained from partial melting are recycled into the corresponding stage of the following cycle.

5. The process according to claim 1, wherein to prevent supercooling of the liquid mixture, the crystallization is initiated by crystals formed on the wall, which are produced by indirect supercooling a small part of the cooling surface in the crystallization zone.

## Revendications

1. Procédé pour la séparation des substances d'un mélange liquide par cristallisation fractionnée, particulièrement approprié à des systèmes de substances à structure de cristal sensible, par séparation d'une couche cristalline contre la paroi d'une zone de cristallisation remplie, le mélange liquide étant refroidi indirectement, par élimination du liquide restant et enlèvement par fusion de la couche cristalline en une ou plusieurs étappes, caractérisé par le fait que la cristallisation a lieu à l'intérieur d'une installation dans laquelle les surfaces de refroidissement sont disposées suivant un angle de 5 à 70° par rapport à la verticale, le mélange liquide se trouvant au repos ou étant agité au plus avec une vitesse à laquelle ne se produit tout juste pas encore l'enlèvement par cassure des cristallites à partir de la couche cristalline.

2. Procédé selon la revendication 1, caractérisé par le fait que l'inclinaison des surfaces de refroidissement par rapport à la verticale est de 10 à 45°.

3. Procédé selon les revendications 1 à 2, caractérisé par le fait que la cristallisation a lieu en plusieurs étapes successives.

4. Procédé selon les revendications 1 à 3, caractérisé par le fait que le reste de la masse en fusion et les fractions obtenues par enlèvement par fusion partielle sont amenés aux étapes correspondantes du cycle suivant.

5. Procédé selon la revendication 1, caractérisé par le fait, que, pour éviter la surfusion du mélange liquide, on induit la cristallisation par des cristaux fromés contre la paroi, cristaux qui sont générés par surfusion indirecte contre une surface de refroidissement de faible étendue dans la zone de cristallisation.